# EUROPEAN PATENT APPLICATION

(11) **EP 1 530 136 A1**
(43) Date of publication of application: **11.05.2005**
(21) Application number: 04256728.9
(22) Date of filing: 01.11.2004
(51) Int. Cl.: G06F 17/30

(54) **Data aggregation**

(30) Priority: 03.11.2003 GB 0325626
(71) Applicant: Infoshare Ltd., Kingston-Upon-Thames, Surrey KT1 1BL (GB)
(72) Inventor: McKeon, Adrian John, Kingston-Upon-Thames Surrey KT2 6LT (GB); McKeown, Myles Peter, Kingston-Upon-Thames Surrey KT2 6AF (GB)
(74) Representative: Faulkner, Thomas John

(57) **Abstract**

An apparatus for aggregating data and for building a virtual data model 4 of an organisation's data which will typically be held in a plurality of different data source 1. The method and apparatus function by first standardising and splitting 2 the data into different types, then performing a cleaning operation 3 on the standardised and split data and from this building a virtual data model 4 which includes the cleaned data as well as an audit trail. The process and apparatus then perform matching and de-duplication operations on the cleaned data. This allows the output of a data set which has been improved, standardised and is of known quality.

## Description

This invention relates to data aggregation.

Increasingly organisations are holding vast amounts of data in respect of their clients, customers, or others. Very often, especially in large organisations, there can be completely different databases or other data sources in which this data is held. Moreover, different people or departments will be involved in the setting up and maintenance of these databases and differences in approach and business processes can quickly lead to these multiple sets of data being intrinsically incompatible with one another. This means that the different databases may all hold data which is relevant to one particular entity for example, one particular customer, but this information is not easily accessible to any one person or department. Furthermore, there is often a problem that the accuracy or quality of the data held in these different databases is unknown.

It would be desirable to have processes and devices which help to bring together data from these different sources and to provide indications of its quality. It would also be desirable to have processes and devices to cleanse and standardise key elements of the data and to make relationships between the data sources that are impossible to establish using conventional relational techniques.

It is an aim of the present invention to aid the bringing together of data from different sources and/or provide information on the quality of data.

According to one aspect of the present invention there is provided a method of aggregating data comprising the steps of:
receiving data from a plurality of sources;
creating a virtual data model of the received data; and
using the virtual data model to generate an aggregated data set.

According to another aspect of the present invention there is provided a method of generating a virtual data model representing data held by an organisation in a plurality of distinct data sources comprising the steps of:
receiving data from the plurality of data sources;
cleaning the received data, whilst maintaining an audit trail of any changes made to the data in the cleaning step;
creating a data set, as the virtual data model, comprising the cleaned data and the audit trail.

According to another aspect of the present invention there is provided a method of aggregating data comprising the steps of:
receiving data from a plurality of sources;
cleaning the received data, whilst maintaining an audit trail of any changes made to the data in the cleaning step;
creating a data set comprising the cleaned data and the audit trail; and
generating output data using said data set.

Such methods can make it possible to bring together data from different sources and/or to cleanse and standardise key elements of the data and/or to make relationships between the data sources that are impossible to establish using conventional relational techniques and thereby to enable a "single view" of any entity to be created by means of semantic and contextual rules and/or provide information on the quality of data and/or provide a data quality "firewall" to screen out poor quality data.

The method may comprise the further step of standardising the format of the received data before the cleaning step.

The method may comprise the further step of splitting the standardised data into respective data types before the cleaning step.

According to another aspect of the present invention there is provided a method of aggregating data comprising the steps of:
receiving data from a plurality of sources;
standardising the format of the received data;
splitting the standardised data into respective data types;
cleaning the split and standardised data, whilst maintaining an audit trail of any changes made to the data in the cleaning step;
creating a data set comprising the cleaned data and the audit trail; and
generating output data using said data set.

The audit trail may be performed at sub-field (or sub-attribute) level so that there are audit entries in respect of every part of every field that has been modified. The audit trail may include entries in respect of every field that has been subject to a cleaning or data quality process or rule.

The audit trail may comprise a measure of the quality of the data in said data set.

The cleaning step may be carried out independently in respect of some or all of the respective data types.

The respective data types may comprise names and addresses, and the cleaning step may be applied to names and addresses included in the received data.

Other respective data types into which received data may be split include:
dates; reference numbers (including say, account numbers, sort codes, National Insurance numbers, customer Ids); telephone numbers; e-mail addresses; etc. Cleaning may be carried out in respect of any one or any combination of these other data types.

The cleaning step may comprise the step of standardising the respective data against a predetermined standard. The predetermined standard may comprise a predetermined list. In the case of name cleaning, the predetermined list may comprise a name list. In the case of address cleaning the predetermined list may comprise a gazetteer.

The cleaning step may comprise standardising the data through the application of rules. The rules may be used to change the data to a standardised form and/or to correct and/or to complete data.

Preferably standardisation against a list is performed in combination with standardisation through rules. In this way, for example, a change performed under the control of a rule may allow matching to an item in the chosen list and hence complete standardisation of the respective data entry.

Preferably the data cleaning process is automated. However, such an automated process is likely to generate queries that require human intervention for resolution. The method may include the step of mimicking and automating human decision making in respect of the cleaning process. Preferably the automated cleaning process is intelligent such that it learns from decisions made by human intervention.

Preferably users may select the list or lists against which data is to be standardised and/or may choose rules which are applied to the data in the cleaning step.

It is important to note that where changes are made during the cleaning process these are logged in the audit trail so that the process that has been conducted is transparent and can be reviewed.

The method may comprise the further step of matching data records in said data set which relate to a common entity and which originate from respective distinct data sources.

The step of matching data records may comprise the step of comparing a plurality of data items in respective data records to decide whether the data records relate to a common entity. The method may be such that at least one threshold level of similarity between data items may be specified, such that the threshold must be met or exceeded before a match is determined. Decisions on matching may be governed by a set of matching rules which specify a plurality of matching criteria at least one of which must be met before a match can be determined. Each matching criterion may identify at least one predetermined type of data item and at least one similarity threshold.

The step of matching data records may comprise the step of updating the audit trail so as to keep a record of matches made in the matching step.

An output of the matching process and/or queries generated by the matching process may be used to modify the cleaning step.

The method may comprise the further step of de-duplication of data in said data set. The step of de-duplication of data may comprise the step of updating the audit trail so as to keep a record of changes made to the data set in the de-duplication step.

It is important to note that the matching and de-duplication steps are performed on the data in the data set i.e. the cleaned data.

Any one of or any combination of the cleaning step, the matching step and the de-duplication step may be performed iteratively. This can help to improve the accuracy or completeness of said data set.

The step of generating output data may comprise the step of generating one of or a combination of the following: at least one relational table in flat file delimited format; an XML data set; a meta data set; at least one report based on at least one of audit trails, matching results and anomalies; update records for feedback to source data systems.

It will be noted that where an update record is generated this may be used to update or otherwise improve one or more of the original data sources from which data was received.

The output data may be generated in a form suitable for population of, or update of, a data warehouse or other information storage system.

The output data may be generated in the form of a cross reference file which identifies all data in respect of a particular entity held in the data set. For example, such a file can provide easy access for a user to all available information in respect of a given client or property.

The method may comprise the step of receiving user feedback and modifying the cleaning and/or matching steps in response to feedback.

According to another aspect of the present invention there is provided apparatus arranged under the control of software for aggregating data by:
receiving data from a plurality of sources;
cleaning the received data, whilst maintaining an audit trail of any changes made to the data in the cleaning step; and
creating a data set comprising the cleaned data and the audit trail.
The apparatus may be further arranged for generating output data using said data set.

The apparatus may further be arranged to output a query notification when unable to automatically clean a data item. The apparatus may further be arranged to, allow input of a decision to resolve the query, and complete the cleaning step for that data item based on that decision. The apparatus may further be arranged to learn from a decision input to resolve a query to aid in the cleaning of future data items.

According to another aspect of the present invention there is provided a computer program comprising code portions that when loaded and run on a computer cause the computer to carry out a method as defined above.

According to another aspect of the present invention there is provided a computer program comprising code portions that when loaded and run on a computer, arrange the computer as apparatus as defined above.

According to a further aspect of the present invention there is provided a computer readable data carrier carrying a program as defined above. The data carrier may comprise a signal or computer readable product such as a hard disc, floppy disk, CD-ROM, DVD-ROM etc.

Embodiments of the present invention will now be described by way of example only with reference to the accompanying drawings in which:-
Figure 1 schematically shows a process embodying the present invention;
Figure 2 schematically shows an input data processing process which forms part of the overall process shown in Figure 1;
Figure 3 shows an exemplary business rules matrix which may be used in the process shown in Figure 1; and
Figure 4 shows a computer system which may be used in implementing the processes of Figure 1 and Figure 2.

The present embodiment relates to the processing and manipulation of data from a plurality of different sources in order to make the data more useful, more accessible and to improve the accuracy of the data overall as well as providing indications of the quality of the data.

An important idea behind the present application is recognising that the IT systems which hold data can be restrictive and distorting of data due to their nature and therefore there is benefit in stripping the data away from the IT and building a data set as a virtual data model which represents all of the data held in the original data sources but which is independent of the IT from which that data was extracted.

Once such a virtual data model has been produced it is possible to output data in a number of different forms which are useful to the organisation whose data has been processed and to other entities such as inspector or standardisation bodies.

Whilst the present processes may be used in respect of data from many different sectors, the financial and banking sector is of particular interest. In such a case the present process and the outputs which can be generated can be useful in compliance with, and the provision of information in relation to, standards and regulations such as SEC, Basel II, Sarbanes-Oxley, IAS 2005.

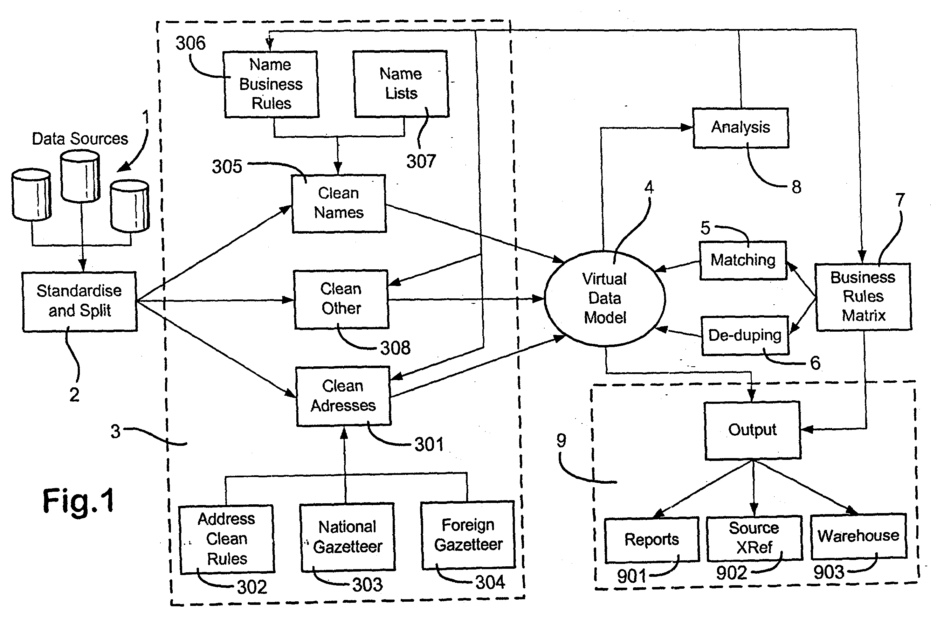

The process of the present application will now be described in more detail with reference to Figures 1, 2 and 3.

Figure 1 schematically shows the overall process in building the virtual data model and generating useful output therefrom.

In a first step 1 data is received from a plurality of different sources typically from within one organisation. The data received can come from any source of structured data and may consist of a complete data set or an update of a previous data set. The data received may or may not have unique identifiers, may or may not be complete and may be relational. In general terms the data will relate to information held in respect of particular entities for example, customers. One example data source would be tables of names, addresses and account numbers from an oracle database.

In a second step 2 the data received is standardised into a common format. In the present embodiment this format is the comma delimited format. It will be appreciated that the received data may be provided in a wide variety of formats and the standardisation of format in step 2 allows the rest of the processing to be carried out in respect of standard input.

Also in the second step 2 the data is split into different data types after standardisation. By this it is meant that data is categorised and split for independent processing at the next stage. Common data types include names, addresses, dates, account numbers, national insurance numbers, custom ID's, reference numbers, telephone numbers, e-mail addresses, etc. As an example a data record such as "Mr,J,Smith,21a High Street,QT7 OZY, Saturday July 6th 2003 6.45pm, 30-47-86, 123456768,jsmith@bt.com" would be split into name, address, date, sort code, account number and e-mail address.

This splitting of data records into different data types allows the later steps in the process to be carried out in respect of the different data types independently. This means that all of the data of one type received from the different data sources may be processed together even though the original data records received from different data sources may have an entirely different structure and content. Therefore, where there is any record in an original data source which includes a name for example, this name data may be subject to appropriate processing irrespective of any other data which may have been held in the original data record.

In the next stage 3 generally indicated by dotted lines in Figure 1, the standardised and split data is processed and cleaned on a type by type basis.

Two important types of data which are processed and cleaned are names and addresses.

Address cleaning is a complex process, for each address there can be thousands of variations all of which may be valid. In the present system, addresses are cleaned 301 making use of user defined address clean rules 302, a national gazetteer 303 and a foreign gazetteer 304.

Name cleaning 305 is an order of magnitude more complex and is performed making use of name business rules 306 and name lists 307.

Similar processes are carried out to clean other data types 308.

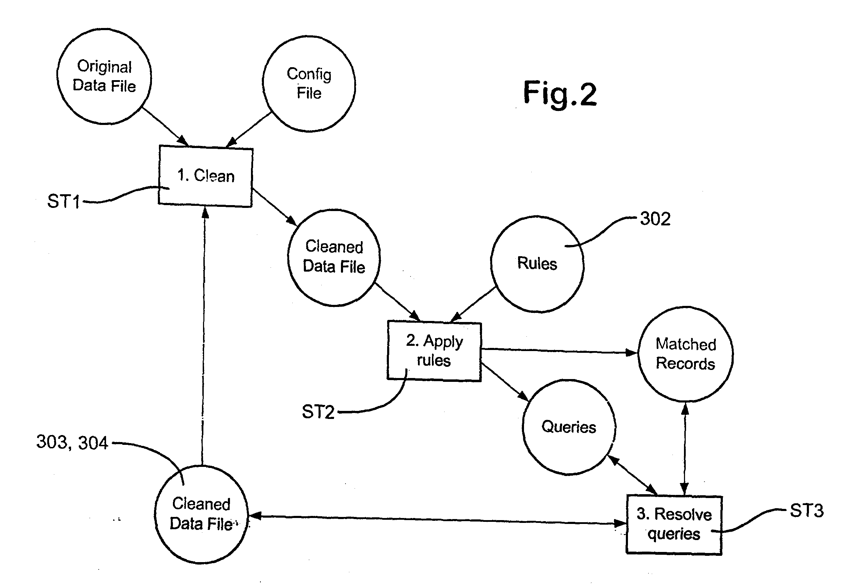

Figure 2 shows in more detail the processes conducted in Step 3 for cleaning the data types. Figure 2 specifically relates to the circumstance of cleaning addresses but analogous processes apply for cleaning the other data types.

In a first step of the cleaning process ST1 the original data file (i.e. the standardised and separated data in respect of a particular data type) is cleaned with reference to a configuration file and gazetteer databases 303, 304. In this process the addresses in the original data file are compared with standardised addresses in the gazetteer databases 303, 304 and where there is a match with a standardised address, a corresponding record is given a validation code which identifies how the record was matched. Alternatively, if there is a partial match or no match then an appropriate validation code is given to the record indicating this. These validation codes make up part of an audit trail which is produced in respect of all of the processing activity conducted in the present system so that the actions taken and decisions made in respect of data and changes made to the data are properly recorded and can be reviewed.

As a result of this first cleaning process ST1 a clean data file is produced including the original data and these validation codes. In a second cleaning stage ST2 the address clean rules 302 are applied to the partially matched or not matched records. As a result of applying the rules in step ST2 and on further consultation of the gazetteer database 303, 304, more matches will typically be made. Therefore as a result of steps ST1 and ST2 a matched records file can be produced. These steps ST1 and ST2 can be performed automatically by a computer system used to implement the present process. However, records which cannot be matched are output to another file, a queries file, and often human intervention will be required to resolve these queries in step ST3.

In the process of resolving queries, decisions may be made by a human user which are scripted into the computer system which can then complete the matching process and add the record to the matched records file. During the query resolution process in step 3 the gazetteer database 303, 304, may be further referenced.

One way or another each of the queries will be resolved so that all the files eventually end up in the matched records file. These matched records can then be output to a data set 4 which forms a virtual data model for all of the input data. It is important to note that any changes made to the records during the application of rules, standardisation against the gazetteer databases, or in query resolution are included in the audit trail which accompanies the data record and is also output to, and forms an intrinsic part of, the virtual data model 4.

In the present embodiment the data processing process described above in relation to Figure 2 is carried out in a large part by a computer under the control of artificial intelligence based software such that where decisions are made by a human user to resolve queries in Step 3, the program may learn from the decisions made, to aid in future automatic decision making.

As mentioned above a similar process to that described with reference to Figure 2 is used in the cleaning of names 305 and the cleaning of other data types 308.

There are of course differences in the exact nature of these processes due to the different data types. Below is given more information relating to the cleaning processes for addresses, names and other types of data.

As mentioned above, in the process of cleaning addresses use is made of national and foreign gazetteer databases 303, 304, in the present embodiment. As will be appreciated a national or foreign gazetteer is an agreed standard address list against which addresses received from different data sources may be standardised. For example, in the UK there is a post office address file which lists the full postal address of every property to which post is delivered. Similarly, in the US there is the United States postal service Zip + 4 file which lists every zip code to which post is delivered.

It will be seen that the important idea is the use of an address list which includes standard addresses so that insofar as possible, all addresses from the input data sources are modified or supplemented with data from the address list to provide standardised and accurate address details in the virtual data model data set 4.

Further, and importantly, a complete audit trail at sub field level is maintained of any changes made to the address data in the cleaning process and this audit trail also forms part of the virtual data model data set 4.

There are a large number of different rules and types of rules which may be included in the address cleaning rules 302. Users can decide which rules to apply in the cleaning process 3 from a standard set and can also add their own if required. Simple rules are expansions of abbreviations or use of common alias names. More complex rules govern the matching of flat names or the detection of street junctions. Users can also decide the level of quality that is acceptable, that is to say how far the cleaning process must proceed and how close the addresses must get to those in the address lists (gazetteer databases 303, 304) before being added to the virtual data model 4. Specific examples of the application of address clean rules 302 are as follows:
· One High Str. Becomes 1 High Street
· Nat Wst Bank, High Street, becomes National Westminster Bank, High Street
· Replace "ST" with "STREET" or "SAINT"
· Match "Flat 1" with "Flat A"
· Match HSBC" with "Midland Bank"
· Assume a postcode is more accurate than a town name

In the case of the name processing 304, similar considerations apply but the process is generally more complex. Again a standardised list, in this case a name list 307, may be used in the cleaning process. In the UK a standard national list of names might be provided by the national electoral role or a commercial supplier such as Experian. In the US such a name list might be provided by a commercial supplier such as Experian or Dunn and Bradstreet. Other techniques which may be used include fuzzy techniques such as Phonex or Soundex, spelling algorithms, the use of alias names, nicknames or alternative names.

The name business rules 306 govern how names are standardised. For a logical matching against a national name list 307 these range from the very simple "Jon" means "John" to "Robert Dyer" also known as "Old Bob". For illogical matching based on human preferences this can range from the simple "John" means "Johann" to the complex "John Smith with an account at the bank" means "Jumbo Jones the stage actor because Jumbo is what most people call him". Human rules are the most complex and most changeable and must be revised continuously to keep the standardisation process current. This is done via continuous feedback links from another parts of the process which collect client feedback.

Examples of name business rules 306 which may be used in the name cleaning process are:
· "SmithJ" becomes "Mr John Smith"
· "The Old Lane" becomes "The Olde Lane Public House"
· "Infoshare Research and Development" becomes "Infoshare R & D LTD"
· "R JONES" becomes "Dr G R Jones"
· "The Narrow Boat" becomes "The Narrowboat"

Again, importantly all decisions and changes made whether automatically or manually by a user generate an audit trail which forms part of the virtual data model data set 4

It is important to note that both name lists 307 and gazetteer databases 303, 304 can quickly become out of date and may be incomplete in the first place. Therefore generally speaking commercially available name lists or gazetteers must be enhanced and maintained locally if they are to be useful. In the present case the gazetteers and name lists are synchronised to and enhanced with local information and these lists and gazetteers 303, 304, 305 are continually updated.

Each of the other types of data such as telephone numbers, account numbers, e-mail addresses are subjected to a similar process using an appropriate rule set. Each rule set can have simple rules for example, range checks and may also include more complex rules such as format checks and multi-field or multi-record validations.

Importantly, again, any decisions and/or changes made to the data either automatically or manually when processing such data generate an audit trail which again forms part of the audit trail in the virtual data model 4.

By virtue of the process above, all of the data contained in the original data sources 1 is stripped away from its supporting IT and represented in the virtual data model data set 4. Moreover, the data, once it has reached the virtual data model data set 4 has been cleaned and improved and has associated with it a comprehensive audit trail which gives details of changes which have been made and also an indication of the quality of the data itself. This data set 4 can then be subject to further processing to give further improvement and can be used to generate useful outputs.

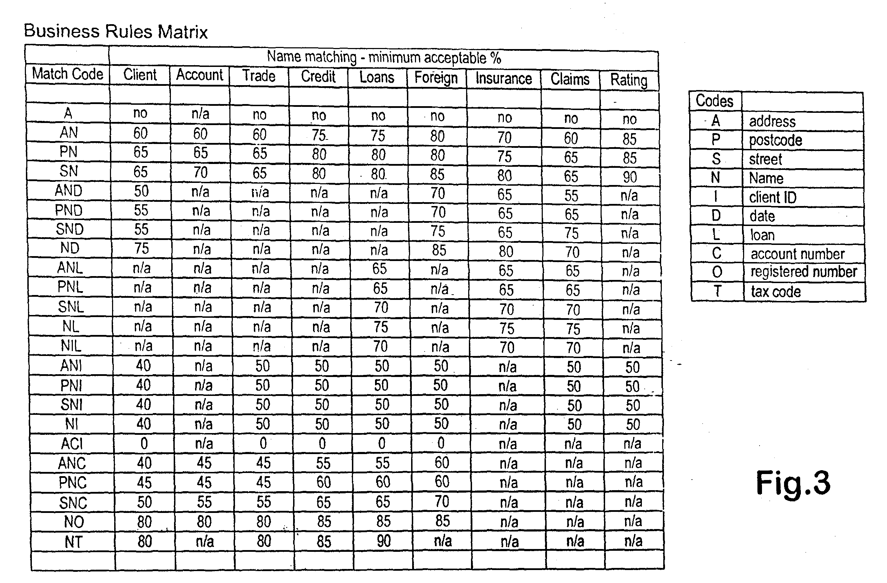

The two main types of further processing to which the data set 4 may be subjected are matching in step 5 and de-duplication in step 6. Both of these operations are carried out under the control of a business rules matrix or set of matrices 7. An example business rules matrix 7 is shown in Figure 3 and will be described in more detail below.

In the matching step, the process which is undertaken, is that of matching different pieces of information or items of data in the virtual data model data set 4 together where they relate to the same entity. The plurality of different data sources 1 which form the input of the process will often contain separate and independent records which relate to the same entity and, in not infrequent circumstances, the fact that these relate to the same entity will not be clear from that original data. However, having subjected the data to the cleaning process in step 3, an important step has been made towards the ability to match together different pieces of data which in fact relate to the same entity.

The matching process 5 may again be carried out by a computer program implementing the present system and ultimately is controlled by a user. A variety of different criteria may be specified for matching records.

Where matching is achieved it can allow a single customer focussed view of all of the input data to be obtained and can also allow a multi-level analysis of all relationships between all of the input records. Results of this analysis can be used to feed back to the earlier stages of the process and these could be used to improve the virtual data model data set 4 to reflect the way the business works and more accurately how the people handling the data within the organisation work.

Example matching rules are as follows:
· Match records if their name matches to at least 80% and they have an address on the same street.
· Match records if they have the same address and the same customer ID
· Match records with addresses in the same town, names matching to at least 70% and the same account number
· Always match records with the same company registered number
· Detect multiple matches with different criteria

The de-duplication process in Step 6 works on a similar principle of comparing data records in the virtual data model data set 4 and looking for data records which are in fact duplicates of one another. Thus for example, if two completely separate records containing the same information about the same client were included in the input data sources 1, one of these may be deleted without any loss of information. Again, the de-duplication is controlled by user defined rules and whilst some duplication may take part in the earlier stages it is important to note that the main processes is carried out in respect of the cleaned data in the virtual data model data set 4. This can help to ensure that fewer errors are made in deleting what appears to be duplicate data and moreover can ensure that the maximum amount of duplicate data is removed.

As mentioned above Figure 3 shows an example business rules matrix which can be used to control the matching process and de-duplication process in Steps 5 and 6 described above.

The matrix shown in Figure 3 shows different data sources along the top and match criteria (given by match codes) down the left hand side. The meaning of the match codes is given in the legend below the matrix, for example AN means a match on address and name. The numbers given in the cells represent the minimum confidence levels which are required for a match of data from the respective source database with the designated matching data items available.

Thus, if there is information from the loans database that could be matched with data from other data sources in the data model 4 and Address and Name are available for determining whether there is a match, a match will only be made if the Address and Name match to at least 75%. On the other hand, if the information were from the "client" database, the Address and Name would only need to match to at least 60% confidence level to allow a match to be made. Taking the example of information from the loans database again, as well as or instead of Address and Name being available for making a match, Name and client ID (match code "NI") may be available for deciding if there is a match. In such a case a 50% match in Name and client ID would be sufficient for a match to be found.

It will be appreciated that if the data model is correct, the results of all equivalent matchings should be the same. That is, if data records are matched together using both "AN" and "NI" the same matching should result, if this is not the case it is indicative that the minimum acceptable confidence level for matching may be set at an inappropriate level. It would mean that data relating to different entities would be matched to one another as though they relate to the same entity.

In practice, during a first run through the matching process, a business rules matrix will be built up from input given by users and this can be used for matching and de-duplication. However, the business rules matrix may be refined after the effects of matching are known. Furthermore, the minimum confidence levels required by the matrix can be changed and the effect of such changes on the virtual data model and the business may be monitored. Thus such a matrix can be used in a method of exploiting a virtual data model data set 4, in practice, once the accuracy of all of the data has been benchmarked through the cleaning process.

An example purpose for which such a matrix can be used is keeping a client list unique i.e. ensuring duplicates do not enter over time. The issue is to ensure that all source data client lists equate to that on the virtual data model as an organisation is in constant flux and its data is forever changing.

As alluded to above one artifact of the business rules matrix is that any match combination should deliver the same unique client on the source data base as on the virtual model. What happens therefore if the client identified on the loan database with a name/address match differs from that identified on the same database using name/loan variables? It means there is an inconsistency between the data source and the virtual model and the analyst needs to drill back down through the virtual model to the source data records and examine the audit trails to pinpoint the reason for the inconsistency.

Thus the business rules matrix lets a client test and retest its data for inconsistencies by comparing source data against the virtual data model and resolving inconsistencies. It gives a client total control over the data it uses to run its business applications.

The type of business matrix used is driven by the application to be served. In the case of the example described above the matrix is a diagnostic tool for keeping the unique client list current. In other cases it could be a matrix to serve regulatory needs like Sarbanes-Oxley, IAS 2005 or business needs like cross selling, client profitability and so on.

As alluded to above, both the matching and the de-duplication processes in 5, 6 can give useful information about the data as a whole. Thus in Step 8 analysis and report information based on the matching and de-duplication processes can be generated and the results from this can be used to feed back to the user defined rules controlling other stages of the process. This can be used to monitor overall performance of the process, to detect anomalies, to provide information necessary to change rules in response to changes in the business, and allow the process to be kept up to date reflecting changes in the data sources.

Once the data set in the virtual data model has been refined by cleaning, matching, de-duplication etc. to a level acceptable to the user output data may be generated in Step 9. Different forms of output data may be generated which are useful for: producing reports 901, the production of cross reference files 902, and for populating a data warehouse 903. More details of these different forms of outputs are described below.

The output can be presented in a wide variety of structure, content, and format. Amongst possible standard outputs are the following:
· Relational tables in flat file delimited format (comma delimited, pipe delimited. With or without quotes etc.)
· XML data based on user schemas or external schemas
· Meta data
· Reports based on audit trails, matching results, anomalies
· Update records for feedback to source systems

As mentioned above the present process is particularly suited for use in the banking and financial sector and the virtual model data set 4 can be queried to output consolidated reports for regulators or other audit examiners and this can help to comply with standards/regulations such as SEC, Basel II, Sarbanes-Oxley, IAS 2005. Further, if questions arise, examiners can drill down from the consolidated report right back to the individual fields of individual records which combine together to produce the report.

A common requirement is to provide a single view of a client across all data sources. The easiest way to extract details of how a company interacts with its client across multiple departments is to access this data via a cross reference file 902 which identifies the correct information in each data set. The cross reference file provides a single view of a client's whole relationship with all parts of an organisation.

The output may be generated in a form suitable for populating a data warehouse 903. Alternatively where the input data sources provide update data showing changes in respective individual databases the output to the warehouse may constitute update information for updating a previously produced set of data using the current process.

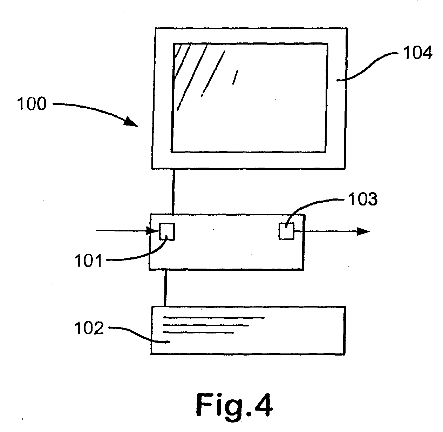

As will be clear from the above, many parts of the above process may be implemented on a general purpose computer 100, schematically shown in Figure 4, operating under the control of software. Such a computer and indeed a program of controlling a computer to facilitate the above process also embody the present invention. In particular, the computer may be arranged under the control of software to:
receive data from data sources 1;
perform the standardisation and splitting processes 2;
perform much of the cleaning process in Step 3 to produce the virtual model data set 4 including the audit trails; and
further may be arranged to carry out the matching and de-duplication operations in Steps 5 and 6 and generate appropriate forms of output in Step 9. Furthermore, whilst human involvement may be required in some stages of the above process, the computer system may again be arranged under software to generate requests for human input where automatic decisions cannot be made and further accept this human input and act upon it to complete the decision making process. Furthermore, as mentioned above the program may include artificial intelligence aspects such that it may learn from decisions input via users.

Of course, a computer used in the implementation of the present process will include conventional data input means 101, (such as a modem, a network card or other communications interface, a keyboard 102 and/or a device for reading media such as floppy disks) via which data from the data sources may be accepted. The computer will further include conventional elements such as a processor, memory and storage devices such as a hard disk (not shown) for use in processing the data and further comprise conventional output means (103) for outputting the data via a communication link or to a data carrier as well as being connectable to a printer for the generation of hard copy and including a display 104. As will be appreciated a computer system implementing the system may include a plurality of computers networked together.

Furthermore, a computer program embodying the present invention may be carried by a signal or a media based data carrier such as a floppy disk, a hard disk, a CD-ROM, or a DVD-ROM etc.

The methods, devices and programs of the present application can aid in the bringing together of data from different sources and/or to cleanse and standardise key elements of the data and/or to make relationships between the data sources that are impossible to establish using conventional relational techniques and thereby to enable a "single view" of any entity to be created by means of semantic and contextual rules and/or provide information on the quality of data and/or provide a data quality "firewall" to screen out poor quality data.

## Claims

1. A method of aggregating data comprising the steps of:
receiving data from a plurality of sources;
cleaning the received data, whilst maintaining an audit trail of any changes made to the data in the cleaning step;
creating a data set comprising the cleaned data and the audit trail; and
generating output data using said data set.

2. A method according to claim 1 comprising the further step of standardising the format of the received data before the cleaning step.

3. A method according to claim 1 or claim 2 comprising the further step of splitting the standardised data into respective data types before the cleaning step.

4. A method according to any one of claims 1 to 3 in which the audit trail is performed at sub-field level so that there are audit entries in respect of every part of every field that has been modified.

5. A method according to any preceding claim in which the audit trail comprises a measure of the quality of the data in said data set.

6. A method according to any preceding claim in which the cleaning step is carried out independently in respect of some or all of the respective data types.

7. A method according to claim 6 in which the respective data types comprise names and addresses, and the cleaning step is applied to names and addresses included in the received data.

8. A method according to claim 6 or claim 7 in which the respective data types include at least one of: dates; reference numbers; telephone numbers; e-mail addresses and cleaning is carried out in respect of any one or any combination of these other data types.

9. A method according to any preceding claim in which the cleaning step comprises the step of standardising the respective data against a predetermined standard.

10. A method according to claim 9 in which the predetermined standard comprises a predetermined list.

11. A method according to claim 10 which is such as to allow a user to select at least one list against which data is to be standardised.

12. A method according to any preceding claim in which the cleaning step comprises standardising the data through the application of rules.

13. A method according to claim 12 which is such as to allow a user to select at least one rule which is applied to the data in the cleaning step.

14. A method according to claim 12 or claim 13 in which the rules are used to at least one of: change the data to a standardised form, correct data, and complete data.

15. A method according to any preceding claim in which standardisation against a list is performed in combination with standardisation through rules.

16. A method according to any preceding claim in which the cleaning step comprises an automated cleaning process which is intelligent such that it learns from decisions made by human intervention.

17. A method according to any preceding claim comprising the further step of matching data records in said data set which relate to a common entity and which originate from respective distinct data sources.

18. A method according to claim 17 in which the step of matching data records comprises the step of comparing a plurality of data items in respective data records to decide whether the data records relate to a common entity.

19. method according to claim 18 in which at least one threshold level of similarity between data items is specified, such that the threshold must be met or exceeded before a match is determined.

20. A method according to claim 17, 18 or 19 in which decisions on matching are governed by a set of matching rules which specify a plurality of matching criteria at least one of which must be met before a match can be determined.

21. A method according to claim 20 in which each matching criterion identifies at least one predetermined type of data item and at least one similarity threshold.

22. A method according to any one of claims 17 to 21 in which the step of matching data records comprises the step of updating the audit trail so as to keep a record of matches made in the matching step.

23. A method according to any one of claims 17 to 22 in which an output of the matching process is used to modify the cleaning step.

24. A method according to any preceding claim in which the method comprises the further step of de-duplication of data in said data set.

25. A method according to claim 24 in which the step of de-duplication of data comprises the step of updating the audit trail so as to keep a record of changes made to the data set in the de-duplication step.

26. A method according to any preceding claim in which the cleaning step is performed iteratively.

27. A method according to any one of claims 17 to 23 and 26 in which the matching step is performed iteratively.

28. A method according to any one of claims 24 to 27 in which the de-duplication step is performed iteratively.

29. A method according to any preceding claim in which the audit trail includes entries in respect of every field that has been subject to a cleaning or data quality process or rule.

30. Apparatus arranged under the control, of software for aggregating data by:
receiving data from a plurality of sources;
cleaning the received data, whilst maintaining an audit trail of any changes made to the data in the cleaning step; and
creating a data set comprising the cleaned data and the audit trail.

31. Apparatus according to claim 30 which is further arranged for generating output data using said data set.

32. Apparatus according to claim 30 or 31 which is arranged to output a query notification when unable to automatically clean a data item.

33. Apparatus according to claim 32 which is arranged to, allow input of a decision to resolve the query, and complete the cleaning step for that data item based on that decision.

34. Apparatus according to any one of claims 30 to 33 which is arranged to learn from a decision input to resolve a query to aid in the cleaning of future data items.

35. A computer program comprising code portions that when loaded and run on a computer cause the computer to carry out a method according to any one of claims 1 to 29.

36. A computer program comprising code portions that when loaded and run on a computer, arrange the computer as apparatus according to any one of claims 30 to 34.

37. A computer readable data carrier carrying a program according to claim 35 or claim 36.

38. A method according to any one of claims 1 to 29 comprising the step of making relationships between the data sources to enable a single view of an entity to be created by means of semantic and contextual rules.

39. A method according to any one of claims 1 to 29 comprising the step of providing a data quality firewall to screen out poor quality data.

40. A method of aggregating data comprising the steps of:
receiving data from a plurality of sources;
creating a virtual data model of the received data; and
using the virtual data model to generate an aggregated data set.

41. A method of generating a virtual data model representing data held by an organisation in a plurality of distinct data sources comprising the steps of:
receiving data from the plurality of data sources;
cleaning the received data, whilst maintaining an audit trail of any changes made to the data in the cleaning step;
creating a data set, as the virtual data model, comprising the cleaned data and the audit trail.

42. A method of aggregating data comprising the steps of:
receiving data from a plurality of sources;
standardising the format of the received data;
splitting the standardised data into respective data types;
cleaning the split and standardised data, whilst maintaining an audit trail of any changes made to the data in the cleaning step;
creating a data set comprising the cleaned data and the audit trail; and
generating output data using said data set.
